# EUROPEAN PATENT SPECIFICATION

(11) **EP 2 482 942 B1**
(45) Date of publication and mention of the grant of the patent: **01.01.2014**
(21) Application number: 10757254.7
(22) Date of filing: 19.08.2010
(51) Int. Cl.: A63B 71/08

(54) **Improved mouthguard and tool**
Verbesserter Mundschutz und Werkzeug
Protège-dents amélioré et outil associé

(30) Priority: 28.09.2009 GB 0916953
(43) Date of publication of application: 08.08.2012
(73) Proprietor: Opro International Limited, Hatfield Hertfordshire AL9 7JE (GB)
(72) Inventor: LOVAT, Anthony, Hemel Hempstead, Herts HP2 7BN (GB)
(74) Representative: Lind, Robert
(86) International application number: PCT/GB2010/051369
(87) International publication number: WO 2011/036466

(56) References cited:
- WO-A1-98/56305
- DE-A1- 19 844 628
- US-A1- 2004 250 818
- US-A1- 2005 256 276

## Description

This invention relates to an apparatus, a mouthguard, and methods for fitting mouthguards adapted to reduce thinning of the base during fitting of the mouthguard.

Mouthguards are commonly used in sports such as hockey and rugby in order to protect a player's facial, and oral, hard and soft tissue from damage caused by external forces.

This protection is especially important in high impact sports where trauma to the mouth or face can occur. For example, mouthguards act to prevent the teeth in the lower jaw from contacting the teeth in the upper jaw. This means that there is less likelihood of a tooth breaking, a tooth being knocked out, concussion, fracture of the jaw or damage to the soft tissue of the mouth when a force is applied to the lower facial area.

One type of mouthguard is known as a "stock mouthguard". This type of mouthguard is supplied to the user in the form in which it is to be used. However, this means that the mouthguard is not suited to the shape of the user's mouth and may, for example, not cover all of the user's teeth.

Furthermore, in view of the bad fit between the mouthguard and the user's teeth it is usual for the mouthguard to not be retained by the user's teeth. This means that the mouthguard is loose and users may need to use their lower jaw, tongue or lips to hold the guard in place. This makes it more difficult for the user to speak and may possibly impair breathing.

In order to overcome these limitations so called "boil and bite" mouthguards are used in place of stock mouthguards. Boil and bite mouthguards are made from thermoplastic materials. On heating, often in boiling water, all or part of the mouthguard becomes soft and pliable. The mouthguard can then be inserted into user's mouth and pressure applied so that the material adapts to the shape of the user's teeth.

"Boil and bite" mouthguards provide an improved fit over that of the stock mouthguards. However, one of the drawbacks of this type of mouthguard is that thinning of the base of the mouthguard, which covers the occlusal surface of the teeth, can occur due to a user exerting excess pressure on the mouthguard during moulding i.e. biting too hard on the mouthguard. This reduces the amount of protection that the mouthguard is capable of providing.

The most effective mouthguards are custom mouthguards which are made individually for each user. Custom mouthguards are made by taking an impression of the user's teeth which can then be used to form a cast of the user's mouth's hard and soft tissues. The custom mouthguard is then fabricated, often in a laboratory, onto the cast of the user's mouth. The use of a cast ensures the mouthguard accurately fits over the user's mouth.

Furthermore, as the mouthguard is not formed by a user biting down on the material of the mouthguard the base of the mouthguard which is formed over the occlusal surface of the teeth does not become thinned. However, these mouthguards are expensive and it is therefore advantageous to make a "boil and bite" mouthguard which has many of the attributes of a custom made mouthguard.

One method that has been used to attempt to reduce thinning of the base of a boil and bite mouthguard is the use of multiple plastics within the mouthguard. One example of such a mouthguard incorporates a harder plastic material into the base of the mouthguard. The "harder" plastic material does not deform at the temperature the mouthguard is heated to during fitting; thus, the base of the mouthguard is at least as thick as the thermosetting plastic insert and a minimum depth of the base is ensured. Another method, such as that described in DE19844628 is to provide a mouthguard having sufficient material between the teeth of the upper and lower jaw to prevent bite through (column 5 lines 12 to 14).

Although the inclusion of the harder plastic material acts to reduce thinning of the mouthguard's base, the presence of the harder plastic material also reduces the effectiveness of the mouthguard. In particular, the harder plastic material will be less effective at distributing forces than the "softer" material the mouthguard is made from. Thus, any external forces applied to the mouthguard are transmitted in greater amounts to the teeth of the user which is undesirable.

According to an aspect of the invention there is provided an apparatus as recited in claim 1. According to another aspect of the invention there is provided a mouthguard as recited in claim 11.

The apparatus may comprise: a mouthguard including: a base, an inner wall extending from the outer side of the base, and an outer wall extending from the inner side of the base; the apparatus also comprising a tool made from a material which is resilient at a temperature when the mouthguard is malleable, wherein the base of the mouthguard includes at least one receiving means arranged to receive at least part of a tool. By having a tool which is resilient to changes in shape while the mouthguard is malleable a user can bite down on the mouthguard and have their jaw only able to close a predetermined depth (equal to the depth of the tool). Thus, the depth of at least a part of the base is guaranteed to be at least the depth of the tool.

The receiving means may be a recess in the bottom surface of the base of the mouthguard. Alternatively, the receiving means includes a cavity configured to receive a portion of the tool within the base. The receiving means may, further, be a combination of one or more recesses and one or more cavities.

Optionally, the cavity may be arranged to hold the portion of the tool in frictional engagement with the mouthguard. The cavity may extend through the mouthguard between the outer wall and the inner wall.

Preferably, the tool is made from thermosetting plastic.

The tool may include an elongated handle suitable for user manipulation of the tool and may include a projection configured to be received by the recess or the cavity. Preferably, the projection is configured to be held in frictional engagement by the cavity.

The tool may also include a stopping means configured to abut the outer wall of the mouthguard when the tool is engaged with the mouthguard.

The mouthguard may comprise a base, an inner wall extending from the outer side of the base and an outer wall extending from the inner side of the base wherein the base includes at least one receiving means arranged to receive at least part of a tool; the tool being made from a material which is resilient at a temperature when the mouthguard is malleable.

The receiving means may be a recess in the bottom surface of the base of the mouthguard. Alternatively, the receiving means includes a cavity configured to receive a portion of the tool within the base. The receiving means may, further, be a combination of one or more recesses and one or more cavities.

Optionally, the cavity may be arranged to hold the portion of the tool in frictional engagement with the mouthguard. The cavity may extend through the mouthguard between the outer wall and the inner wall.

According to a further aspect of the invention there is provided a method of fitting a mouthguard to a user's mouth comprising the steps of:
i) heating a mouthguard,
ii) removably engaging a tool with the mouthguard,
iii) inserting the mouthguard and tool into the user's mouth,
iv) instructing the user to bite down on the mouthguard,
v) removing the mouthguard and tool from the user's mouth,
vi) allowing the mouthguard to cool, and
vii) removing the tool from engagement with the mouthguard,
wherein steps i) and ii) are carried out prior to steps iii) and iv) and steps v), vi) and vii) are carried out after steps iii) and iv). As will be understood by the skilled person steps i) and ii) and steps vi) and vii), at least, are interchangeable.

Other aspects and features of the present invention will become apparent to those ordinarily skilled in the art upon review of the following description of specific embodiments of the invention in conjunction with the accompanying figures.

The invention will now be described, by way of example only, with reference to the accompanying drawings in which:-
Figure 1 illustrates a front view of the mouthguard of the present invention;
Figure 2 is a birds-eye view of the mouthguard;
Figure 3 illustrates a side view of the mouthguard;
Figure 4 is a birds-eye view of the tool of the present invention; and
Figure 5 illustrates a side view of the tool.

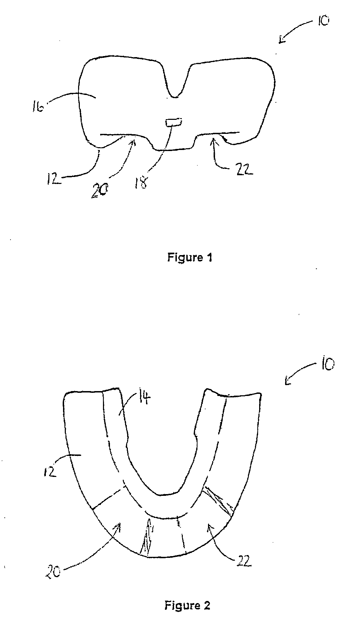

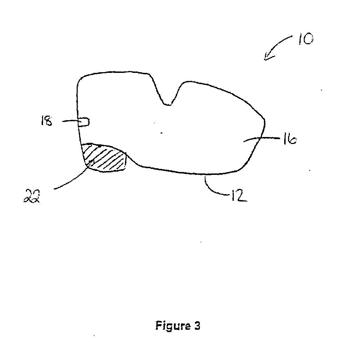

Figures 1 to 3 illustrate a mouthguard 10 according to the present invention. The mouthguard is generally U-shaped is provided with a base 12 from which an inner wall 14 and an outer wall 16 extend. The base 12 is designed to be adjacent to the occlusal surface of the teeth when the mouthguard 10 is in use. The inner wall 14 is adjacent to the palatal surface of the teeth. The outer wall 16 is adjacent to the buccal surface of the teeth and can be seen when the mouthguard 10 is in use.

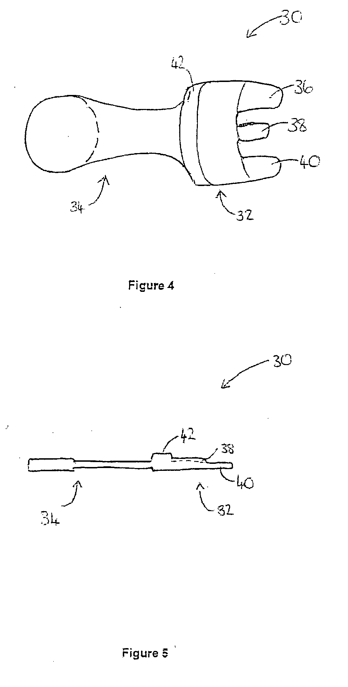

The base 12 of the mouthguard 10 is provided with a cavity 18 which extends into the base 12 from the outer wall 16 of the mouthguard 10. The cavity 18 is configured to receive part of a tool (illustrated in Figures 4 and 5) and hold it in frictional engagement.

The base 12 is further provided with two recesses 20, 22 or indentations which also traverse from the outer wall 16 to the inner wall 14 of the mouthguard 10. The recesses 20, 22 are portions of the bottom wall of the base 12 that are in a different plane to the rest of the base 12. Preferably, the difference between the two planes is equal to the depth of the parts of the tool received in the recesses 20 and 22. This means that when the tool is engaged with the mouthguard 10 the parts of the tool placed within the recesses have a bottom wall in the same plane as the bottom wall of the base 12 of the mouthguard 10.

The mouthguard 10 is preferably formed from a thermoplastics material which becomes ductile and malleable when heated.

Figures 4 and 5 illustrate a tool 30 in accordance with the present invention. The tool 30 is generally trident shaped and has a head 32 for engagement with the mouthguard 10 and an elongate handle 34.

The head 32 of the tool 30 has three protrusions 36, 38 and 40. The central protrusion 38 is adapted to form a frictional engagement with the cavity 18 of the mouthguard 10 to hold the tool 30 in engagement with the mouthguard 10. The two outer protrusions 36, 40 have a length corresponding to the width of the recesses 20, 22 of the mouthguard 10. Additionally, as discussed previously, the depth of the outer protrusions 36 and 42 substantially corresponds to the depth of the recesses 22 and 24 in the base 12 of the mouthguard 10.

Thus, when the mouthguard 10 and tool 30 are engaged and bitten down upon during the process of moulding the mouthguard the user's jaw is never able to come closer together than the depth of the protrusions 36 and 40 of the tool 30. In this way, the reduction in the depth of the base 13 of the mouthguard is minimised; the depth of the base being at least the depth of the protrusions 36 and 40 of the tool 30 in the parts of the base 12 where the recesses and cavities are not present.

The head 31 of the tool 30 is preferably provided with a ridged stop 42 which contacts the outer wall 16 of the mouthguard 10 when the protrusions 36, 38 and 40 have been fully engaged in the correct positions with the cavity 18 and recesses 20 and 22. The ridged stop 42 minimises the opportunities for a user to mis-site the tool on the mouthguard 10. Although the ridged stop is illustrated in Figures 4 and 5 as a single raised portion the skilled person will understand that it may be formed from several separate raised portions or a single portion which does not extend along the entire width of the head 32 of the tool 30.

Preferably, the tool 30 is formed from a harder plastics material. For the purposes of this application the term "harder plastics material" defines a plastics material which retains its shape at a temperature where the material of the mouthguard is malleable. This harder plastics material may, for example, be a thermosetting plastic. This means that if the tool 30 is heated along with the mouthguard 32, the tool 30 does not become deformable or malleable. Alternatively, the tool 30 may be made from any suitable material with a deformation temperature greater than the deformation temperature of the material forming the mouthguard 10. The deformation temperature being the temperature at which a material exhibits ductile properties.

One method of moulding a mouthguard 10 of the present invention will now be described with reference to the Figures. Before heating the mouthguard 10, the tool 30 is removably engaged with the mouthguard 10. The central protrusion 38 is frictionally engaged with the cavity 18 and the two outer protrusions 36 and 40 are received within the recesses 20 and 22 of the mouthguard 10.

The mouthguard 10 is then heated, typically heated by being placed in boiling water, until it has the required amount of ductility. Once it has the desired amount of ductility, the mouthguard 10, with the tool 30 still engaged, is placed in a user's mouth and bitten down on. The presence of the tool's projections in the recesses stops the users jaw from fully closing; thus, preventing the user from reducing the depth of the base 12 of the mouthguard 10. The depth of the base 12 of the mouthguard 10 will therefore always be at least the depth of the tool 30.

As will be understood by the skilled person, the mouthguard may comprise any number and combination of cavities and recesses. For example, it may be provided with a single recess in the centre of the mouthguard or two recesses with no cavity. In an alternative embodiment the mouthguard may not be provided with any recesses but be provided with one or more cavities, each cavity operable to receive a projection from the tool.

Furthermore, the recesses and/or the cavity may extend only partially into the base of the mouthguard or project completely between the outer wall and the inner wall. However, the projection(s) should extend sufficiently between the outer wall and the inner wall that they prevent closure of a jaw when a mouthguard with the tool engaged is bitten into. The exact length of the extension of the projection(s) will depend on the placement of the projection(s) in the user's mouth. The length of the projections will be smaller if the projection(s) extends between the rear teeth as there is less of a gap between the upper and lower teeth at the rear of the mouth; conversely the length of the projections will be greater if the projections are situated to prevent closure of the front teeth as there is a greater gap between the upper and lower teeth at the front of the mouth.

Optionally, the recesses and projections may not be equal depths but may be of different depths. For example, the depth of the projections may be less than the depth of the recesses such that some indentation is made by the lower teeth into the base of the mouthguard. Preferably the projections have a depth of 0.5 to 1 mm less than the recesses. Alternatively, it may be advantageous to have the depth of the projections greater than those of the recesses.

## Claims

1. Apparatus comprising:
a) a mouthguard (10) including
i) a base (12);
ii) an inner wall (14) extending from the inner side of the base (12);
iii) an outer wall (16) extending from the outer side of the base (12);
b) a tool (30), including a protrusion (36, 38, 40), made from a material which is resilient at a temperature when the mouthguard is malleable
wherein the base (12) of the mouthguard (10) includes at least one receiving means (18, 20, 22) extending from the outer wall (16) of the mouthguard (10) towards the inner wall (14) of the mouthguard (10), the apparatus being **characterised by** the receiving means being arranged to removeably receive the protrusion (36, 38, 40) such that, when the tool (30) is engaged with the mouthguard (10) the protrusion (36, 38, 40) extends between the rear teeth of a user when the mouthguard (10) with the tool (30) engaged is bitten into such that a user's jaw cannot come closer together than the depth of the protrusion (36, 38, 40) of the tool (30).

2. An apparatus as claimed in Claim 1 wherein the receiving means (18, 20, 22) comprises a recess (20, 22) in the bottom surface of the base (12) of the mouthguard (10) or a cavity (18) configured to receive a portion of the tool (30) within the base (12).

3. An apparatus as claimed in Claim 2 wherein the cavity (18) is arranged to hold the protrusion of the tool (38) in frictional engagement with the mouthguard (10).

4. An apparatus as claimed in any preceding claim wherein the cavity (18) extends through the base of the mouthguard (10) between the outer wall (16) and the inner wall (14).

5. An apparatus as claimed in any preceding claim wherein the tool (30) is made from thermosetting plastic.

6. An apparatus as claimed in any preceding claim wherein the tool (30) includes an elongate handle (34) suitable for user manipulation of the tool (30).

7. An apparatus as claimed in Claim 2 or any one of Claims 3 to 8 when dependent upon Claim 2 wherein the tool (30) includes a protrusion (36, 40) configured to be received by the recess (20, 22) in the mouthguard (10).

8. An apparatus as claimed in Claim 2 or any of Claims 3 to 7 when dependent upon Claim 2 including a protrusion (38) configured to be received by the cavity (18).

9. An apparatus as claimed in Claim 8 wherein the protrusion (38) is configured to be held in frictional engagement by the cavity (18).

10. An apparatus as claimed in any preceding claim wherein the tool (30) further comprises a stopping means (42) configured to abut the outer wall (16) of the mouthguard (10) when the tool (30) is engaged with the mouthguard (10).

11. A mouthguard (10) comprising
(a) a base (12);
(b) an inner wall (14) extending from the inner side of the base (12);
(c) an outer wall (16) extending from the outer side of the base (12);;
wherein the base (12) of the mouthguard (10) includes at least one receiving means (18, 20, 22) extending from the outer wall (16) of the mouthguard (10) towards the inner wall (14) of the mouthguard (10), the receiving means being arranged to removeably receive a protrusion (36, 38, 40) on a tool (30), the tool (30) being made from a material which is resilient at a temperature when the mouthguard (10) is malleable, the mouthguard (10) being **characterised in that** the receiving means (18, 20, 22) of the mouthguard (10) is arranged, such that, when the tool (30) is engaged with the mouthguard (10), the protrusion (36, 38, 40) extends between the rear teeth of a user when the mouthguard (10) and tool (30) are engaged such that a user's jaw cannot come closer together than the depth of the protrusion (36, 38, 40) of the tool (30).

12. A mouthguard as claimed in Claim 11 wherein the receiving means (18, 20, 22) comprises a recess (20, 22) in the bottom surface of the base (12) of the mouthguard (10) or a cavity (18) configured to receive a portion of the tool (30) within the base (12).

13. A mouthguard as claimed in Claim 12 wherein the cavity (18) is arranged to hold the protrusion of the tool (38) in frictional engagement with the mouthguard (10).

14. A mouthguard as claimed in any one of Claims 11 to 13 wherein the cavity (18) extends through the base of the mouthguard (10) between the outer wall (16) and the inner wall (14).

15. A method of fitting a mouthguard to a user's mouth comprising the steps of
i) heating a mouthguard (10) as claimed in any preceding claim;
ii) removably engaging a tool (30) as claimed in any preceding claim with the mouthguard
iii) inserting the mouthguard (10) and tool (30) into the user's mouth
iv) instructing the user to bite down on the mouthguard (10)
v) removing the mouthguard (10) and tool (30) from the user's mouth
vi) allowing the mouthguard (10) to cool
vii) removing the tool (30) from engagement with the mouthguard (10)
wherein steps i) and ii) are interchangeable, steps v), vi) and vii) are interchangeable and wherein steps i) and ii) are carried out prior to steps iii) and iv) and steps v), vi) and vii) are carried out after steps iii) and iv).

## Patentansprüche

1. Vorrichtung, die Folgendes umfasst:
a) einen Mundschutz (10), der Folgendes einschließt:
i) eine Basis (12),
ii) eine Innenwand (14), die sich von der Innenseite der Basis (12) aus erstreckt,
iii) eine Außenwand (16), die sich von der Außenseite der Basis (12) aus erstreckt,
b) ein Werkzeug (30), das einen Vorsprung (36, 38, 40) einschließt, hergestellt aus einem Werkstoff, der bei einer Temperatur, wenn der Mundschutz formbar ist, nachgiebig ist,
wobei die Basis (12) des Mundschutzes (10) wenigstens ein Aufnahmemittel (18, 20, 22) einschließt, das sich von der Außenwand (16) des Mundschutzes (10) zu der Innenwand (14) des Mundschutzes (10) hin erstreckt, wobei die Vorrichtung **dadurch gekennzeichnet ist, dass** das Aufnahmemittel dafür angeordnet ist, entfernbar den Vorsprung (36, 38, 40) aufzunehmen derart, dass, wenn das Werkzeug (30) mit dem Mundschutz (10) in Eingriff gebracht wird, sich der Vorsprung (36, 38, 40) zwischen den hinteren Zähnen eines Benutzers erstreckt, wenn derart in den Mundschutz (10) mit dem eingerückten Werkzeug gebissen wird, dass ein Kiefer des Benutzers nicht näher kommen kann als die Tiefe des Vorsprungs (36, 38, 40) des Werkzeugs (30).

2. Vorrichtung nach Anspruch 1, wobei das Aufnahmemittel (18, 20, 22) eine Aussparung (20, 22) in der unteren Fläche des Basis (12) des Mundschutzes (10) oder einen Hohlraum (18), der dafür konfiguriert ist, einen Abschnitt des Werkzeugs (30) innerhalb der Basis (12) aufzunehmen, umfasst.

3. Vorrichtung nach Anspruch 2, wobei der Hohlraum (18) dafür eingerichtet ist, den Vorsprung des Werkzeugs (38) in einem reibschlüssigen Eingriff mit dem Mundschutz (10) zu halten.

4. Vorrichtung nach einem der vorhergehenden Ansprüche, wobei sich der Hohlraum (18) durch die Basis des Mundschutzes (10) zwischen der Außenwand (16) und der Innenwand (14) erstreckt.

5. Vorrichtung nach einem der vorhergehenden Ansprüche, wobei das Werkzeug (30) aus einem warmaushärtenden Kunststoff hergestellt ist.

6. Vorrichtung nach einem der vorhergehenden Ansprüche, wobei das Werkzeug (30) einen länglichen Griff (34) einschließt, der für eine Benutzerhandhabung des Werkzeugs (30) geeignet ist.

7. Vorrichtung nach Anspruch 2 oder einem der Ansprüche 3 bis 8, soweit abhängig von Anspruch 2, wobei das Werkzeug (30) einen Vorsprung (36, 40) einschließt, der dafür konfiguriert ist, durch der Aussparung (20, 22) in dem Mundschutz (10) aufgenommen zu werden.

8. Vorrichtung nach Anspruch 2 oder einem der Ansprüche 3 bis 7, soweit abhängig von Anspruch 2, die einen Vorsprung (38) einschließt, der dafür konfiguriert ist, durch den Hohlraum (18) aufgenommen zu werden.

9. Vorrichtung nach Anspruch 8, wobei der Vorsprung (38) dafür konfiguriert ist, durch den Hohlraum (18) in einem reibschlüssigen Eingriff gehalten zu werden.

10. Vorrichtung nach einem der vorhergehenden Ansprüche, wobei das Werkzeug (30) ferner ein Anschlagmittel (42) umfasst, das dafür konfiguriert ist, an die Außenwand (16) des Mundschutzes (10) anzustoßen, wenn das Werkzeug (30) in Eingriff mit dem Mundschutz (10) gebracht ist.

11. Mundschutz (10), der Folgendes umfasst:
a) eine Basis (12),
b) eine Innenwand (14), die sich von der Innenseite der Basis (12) aus erstreckt,
c) eine Außenwand (16), die sich von der Außenseite der Basis (12) aus erstreckt,
wobei die Basis (12) des Mundschutzes (10) wenigstens ein Aufnahmemittel (18, 20, 22) einschließt, das sich von der Außenwand (16) des Mundschutzes (10) zu der Innenwand (14) des Mundschutzes (10) hin erstreckt, wobei das Aufnahmemittel dafür angeordnet ist, entfernbar einen Vorsprung (36, 38, 40) an einem Werkzeug (30) aufzunehmen, wobei das Werkzeug (30) aus einem Werkstoff hergestellt ist, der bei einer Temperatur, wenn der Mundschutz (10) formbar ist, nachgiebig ist, wobei der Mundschutz **dadurch gekennzeichnet ist, dass** das Aufnahmemittel (18, 20, 22) des Mundschutzes (10) derart angeordnet ist, dass, wenn das Werkzeug (30) mit dem Mundschutz (10) in Eingriff gebracht wird, sich der Vorsprung (36, 38, 40) zwischen den hinteren Zähnen eines Benutzers erstreckt, wenn der Mundschutz (10) und das Werkzeug (30) derart in Eingriff sind, dass ein Kiefer des Benutzers nicht näher kommen kann als die Tiefe des Vorsprungs (36, 38, 40) des Werkzeugs (30).

12. Mundschutz nach Anspruch 11, wobei das Aufnahmemittel (18, 20, 22) eine Aussparung (20, 22) in der unteren Fläche des Basis (12) des Mundschutzes (10) oder einen Hohlraum (18), der dafür konfiguriert ist, einen Abschnitt des Werkzeugs (30) innerhalb der Basis (12) aufzunehmen, umfasst.

13. Mundschutz nach Anspruch 12, wobei der Hohlraum (18) dafür eingerichtet ist, den Vorsprung des Werkzeugs (30) in einem reibschlüssigen Eingriff mit dem Mundschutz (10) zu halten.

14. Mundschutz nach einem der Ansprüche 11 bis 13, wobei sich der Hohlraum (18) durch die Basis des Mundschutzes (10) zwischen der Außenwand (16) und der Innenwand (14) erstreckt.

15. Verfahren zum Anpassen eines Mundschutzes an dem Mund eines Benutzers, das die folgenden Schritte umfasst:
i) das Erwärmen eines Mundschutzes (10) nach einem der vorhergehenden Ansprüche,
ii) das entfernbare Einrücken eines Werkzeugs (30) nach einem der vorhergehenden Ansprüche mit dem Mundschutz,
iii) das Einsetzen des Mundschutzes (10) und des Werkzeugs (30) in den Mund des Benutzers,
iv) das Anweisen des Benutzers, auf den Mundschutz (10) zu beißen,
v) das Entfernen des Mundschutzes (10) und des Werkzeugs (30) aus dem Mund des Benutzers,
vi) das Abkühlenlassen des Mundschutzes (10),
vii) das Entfernen des Werkzeugs (30) aus dem Eingriff mit dem Mundschutz (10),
wobei die Schritte i) und ii) austauschbar sind Schritte v), vi) und vii) austauschbar sind und wobei die Schritte i) und ii) vor den Schritten iii) und iv) ausgeführt werden und die Schritte v), vi) und vii) nach den Schritten iii) und iv) ausgeführt werden.

## Revendications

1. Appareil, comprenant :
a) un protège-dents (10), englobant :
i) une base (12) ;
ii) une paroi interne (14), s'étendant à partir du côté interne de la base (12) ;
iii) une paroi externe (16), s'étendant à partir du côté externe de la base (12) ;
b) un outil (30), englobant une saillie (36, 38, 40), composé d'un matériau qui est élastique à une température en présences de laquelle le protège-dents est malléable ;
dans lequel la base (12) du protège-dents (10) englobe au moins un moyen de réception (18, 20, 22), s'étendant de la paroi externe du protège-dents (10) vers la paroi interne (14) du protège-dents (10), l'appareil étant **caractérisé en ce que** le moyen de réception est agencé de sorte à recevoir de manière amovible la saillie (36, 38, 40) de sorte que lorsque l'outil (30) est engagé avec le protège-dents (10), la saillie (36, 38, 40) s'étend entre les dents arrière d'un utilisateur lors de la morsure dans le protège-dents (10), l'outil étant engagé, la mâchoire d'un utilisateur ne pouvant ainsi pas se rapprocher au-delà de la profondeur de la saillie (36, 38, 40) de l'outil (30).

2. Appareil selon la revendication 1, dans lequel le moyen de réception (18, 20, 22) comprend un évidement (20, 22) dans la surface inférieure de la base (12) du protège-dents (10), ou une cavité (18), configurée de sorte à recevoir une partie de l'outil (30) dans la base (12).

3. Appareil selon la revendication 2, dans lequel la cavité (18) est agencée de sorte à retenir la saillie de l'outil (38) dans un engagement par frottement serré avec le protège-dents (10).

4. Appareil selon l'une quelconque des revendications précédentes, dans lequel la cavité (18) s'étend à travers la base du protège-dents (10) entre la paroi externe (16) et la paroi interne (14).

5. Appareil selon l'une quelconque des revendications précédentes, dans lequel l'outil (30) est composé de plastique thermodurcissable.

6. Appareil selon l'une quelconque des revendications précédentes dans lequel l'outil (30) englobe une poignée allongée (34) appropriée pour une manipulation de l'outil (30) par un utilisateur.

7. Appareil selon la revendication 2 ou selon l'une quelconque des revendications 3 à 8, dépendant de la revendication 2, dans lequel l'outil (30) englobe une saillie (36, 40) configurée de sorte à être reçue par l'évidement (20, 22) dans le protège-dents (10).

8. Appareil selon la revendication 2 ou l'une quelconque des revendications 3 à 7, dépendant de la revendication 2, englobant une saillie (38) configurée de sorte à être reçue par la cavité (18).

9. Appareil selon la revendication 8, dans lequel la saillie (38) est configurée de sorte à être retenue dans un engagement par frottement par la cavité (18).

10. Appareil selon l'une quelconque des revendications précédentes, dans lequel l'outil (30) comprend en outre un moyen d'arrêt (42), configuré de sorte à buter contre la paroi externe (16) du protège-dents (10) lorsque l'outil (30) est engagé avec le protège-dents (10).

11. Protège-dents (10), comprenant
(a) une base (12) ;
(b) une paroi interne (14), s'étendant à partir du côté interne de la base (12) ;
(c) une paroi externe (16), s'étendant à partir du côté externe de la base (12) ;
dans lequel la base (12) du protège-dents (10) englobe au moins un moyen de réception (18, 20, 22), s'étendant de la paroi externe (16) du protège-dents (10) vers la paroi interne (14) du protège-dents (10), le moyen de réception étant agencé de sorte à recevoir de manière amovible une saillie (36, 38, 40) sur un outil (30), l'outil (30) étant composé d'un matériau qui est élastique à une température en présence de laquelle le protège-dents (10) est malléable, le protège-dents (10) étant **caractérisé en ce que** le moyen de réception (18, 20, 22) du protège-dents (10) est agencé de sorte que, lorsque l'outil (30) est engagé avec le protège-dents (10), la saillie (36, 38, 40) s'étend entre les dents arrière d'un utilisateur, lorsque le protège-dents (10) et l'outil sont engagés, la mâchoire d l'utilisateur ne pouvant ainsi pas se rapprocher au-delà de la profondeur de la saillie (36, 38, 40) de l'outil (30).

12. Protège-dents selon la revendication 11, dans lequel le moyen de réception (18, 20, 22) comprend un évidement (20, 22) dans la surface inférieure de la base (12) du protège-dents (10), ou une cavité (18) configurée de sorte à recevoir une partie de l'outil (30) dans la base (12).

13. Protège-dents selon la revendication 12, dans lequel la cavité (18) est agencée de sorte à retenir la saillie de l'outil (38) dans un engagement par frottement avec le protège-dents (10).

14. Protège-dents selon l'une quelconque des revendications 11 à 13, dans lequel la cavité (18) s'étend à travers la base du protège-dents (10) entre la paroi externe (16) et la paroi interne (14).

15. Procédé d'ajustement d'un protège-dents sur la bouche d'un utilisateur, comprenant les étapes ci-dessous :
i) chauffage d'un protège--dents (10) selon l'une quelconque des revendications précédentes;
ii) engagement amovible d'un outil (30) selon l'une quelconque des revendications précédentes dans le protège-dents ;
iii) insertion du protège-dents (10) et de l'outil (30) dans la bouche de l'utilisateur ;
iv) transmission d'une instruction à l'utilisateur pour qu'il morde dans le protège-dents (10)
v) retrait du protège-dents (10) et de l'outil (30) de la bouche de l'utilisateur ;
vi) refroidissement du protège-dents (10)
vii) dégagement de l'outil (30) de son engagement avec le protège-dents (510),
dans lequel les étapes i) et ii) étant interchangeables, les étapes v), vi) et vii) étant interchangeables et les étapes i) et ii) étant effectuées avant les étapes iii) et iv) et les étapes v), vi) et vii) étant effectuées après les étapes iii) et iv).
